# EUROPEAN PATENT SPECIFICATION

(11) **EP 2 546 112 B1**
(45) Date of publication and mention of the grant of the patent: **15.01.2014**
(21) Application number: 11005794.0
(22) Date of filing: 15.07.2011
(51) Int. Cl.: B60R 21/36

(54) **Airbag arrangement for a vehicle and a method for manufacturing of the same**
Airbag-Anordnung für ein Fahrzeug und Verfahren zu deren Herstellung
Agencement d'airbag pour véhicule et procédé de fabrication associé

(43) Date of publication of application: 16.01.2013
(73) Proprietor: Autoliv Development AB, 447 83 Vårgårda (SE)
(72) Inventor: Magnusson, Ulf, 44157 Alingsas (SE); Wolf, Harald, 82131 Stockdorf (DE); Albert, Jörg, 82110 Germering (DE); Schock, Marc, 85757 Karlsfeld (DE)
(74) Representative: Schön, Thilo

(56) References cited:
- EP-A1- 1 350 692
- JP-A- 2006 219 046
- US-A1- 2006 267 317

## Description

This invention relates to an airbag arrangement according to the preamble of claim 1 and especially to a pedestrian airbag arrangement according to claim 7, and a method for the manufacturing the same according to claim 9.

When a motor vehicle is involved in a head-on collision with a pedestrian, the body and/or head of the pedestrian often strikes the windscreen of the vehicle. This can result in serious injury to the pedestrian, and significant damage to the vehicle.

In order to better protect the pedestrian, it has been proposed to provide a pedestrian airbag which, if vehicle sensors indicate that a relevant collision with a pedestrian is occurring or is likely to occur, inflates to cover a central portion of the windscreen, and/or the left and right A-pillars of the vehicle. Typically, the air-bag is stored beneath a rear edge of the vehicle's bonnet, or beneath a cowl which is provided between the base of the windscreen and the rear of the bonnet. The rear of the bonnet may be lifted, by a suitable air-bag, piston or other arrangement, to allow sufficient space for the air-bag to inflate.

The aim of a pedestrian airbag of this type is to provide an inflated cushion over the windscreen and/or A-pillars of the vehicle, thus cushioning the impact of a pedestrian with these parts of the vehicle.

One potential problem that can occur with the use of airbags of this type is that, once the airbag has been inflated, the driver of the vehicle is hindered to look out of the windscreen. If a vehicle collides with a pedestrian with sufficient force that the pedestrian strikes the windscreen of the vehicle, the vehicle is likely to be travelling at a considerable speed. If a pedestrian airbag inflates while the vehicle is travelling at speed, and subsequently obscures the driver's view for a long period of time, the result may be that the driver fails to avoid one or more further objects or hazards before bringing the vehicle to a complete stop.

One solution to this problem is presented in the generic JP 2006219046. This document discloses a pedestrian air-bag which has a pair of straps, which are attached to upper left and right corners of the air-bag. As the air-bag inflates the straps are drawn from a reel whereat a pre-tensioned spring being connected to the reel is further stressed while the airbag deploys. A locking device prevents the reel from turning into the unloading direction of the spring. The locking device can be brought into an unlocking state by means of a manually activated trigger. After manually activating the trigger, the deflating airbag is drawn from the windscreen allowing the driver to see clearly out of the windscreen again.

The problem of the solution presented in this document is, that usually the driver who is involved in a accident is too busy or too confused to operate the trigger in an early stage of the accident where it would be necessary.

The present invention sets itself the problem to provide an improved pedestrian airbag arrangement of the generic type. Especially it is an object of the invention to provide a retraction means which starts automatically with the retraction of the airbag when the airbag has reached a pre-determined position.

This problem is solved by an airbag arrangement according to claim 1.

According to the invention the retraction means comprises a mechanically stable elongated member, especially an arm, extending from a first end to a second end and being connected to a vehicle-fixed part via its first end and to the airbag via its second end and/or via a section being located between its first end and its second end. The mechanically stable elongated member is elastic in at least one direction perpendicular to its longitudinal direction and/or is pivoting connected to the vehicle-fixed part against the force of an elastic element such that the second end of the mechanically stable elongated member is displaced by the deploying airbag under elastic deformation of the mechanically stable elongated member and/or the elastic element. The elastic element and/or the elongated member is biased by this movement such that it exerts a returning force onto the airbag. Once the airbag is fully deployed and the gas pressure inside the airbag drops, it is retracted by this force. So, one does not need a separate trigger in order to start the retraction process, the retraction process start "automatically".

It is a further advantage that no straps or the same are needed. When using straps or the like, one has to take care the straps do not "catch" the deploying airbag, so that it does not reach its fully deployed state.

According to claim 9, the manufacture and mounting of the airbag arrangement is very easy and cost effective.

Preferred embodiments of the invention are defined in the sub-claims.

The invention will now be explained in furter detail in view of the accompanying figures. Further advantages of the invention and preferred embodiments will be understood in view of this detailed description.

The figures show:
- Figure 1a: a diagrammatic perspective view of the front of a vehicle with a pedestrian airbag arrangement arranged under the bonnet in front of the windscreen,
- Figure 1b: what is shown in Figure 1a viewed from direction R1 in Figure 1a,
- Figure 1c: a sectional view taken along line A-A in Figure 1b,
- Figure 2a: what is shown in Figure 1a when the airbag of the pedestrian airbag arrangement is in its fully deployed state,
- Figure 2b: what is shown in Figure 2a in a representation according to Figure 1b.
- Figure 2c: what is shown in Figure 2b in a representation according to Figure 1c.
- Figure 3a: the pedestrian airbag in a state in which the airbag has been retracted from the windscreen by means of its retraction device to some extend,
- Figure 3b: what is shown in Figure 3a in a representation according to Figure 2b.
- Figure 3c: what is shown in Figure 3b in a representation according to Figure 2c,
- Figure 4a: a first embodiment of a retraction means, viewed from the airbag in travelling direction of the vehicle,
- Figure 4b: a sectional view taken along line B-B in Figure 4a,
- Figure 5: what is shown in Figure 4a after activation of the gas generator,
- Figure 6: a second embodiment of the retraction means in a representation according to Figure 5,
- Figure 7: what is shown in Figure 6 after activation of the gas generator,
- Figure 8a: a third embodiment of a retraction means in a representation according to Figure 4a,
- Figure 8b: a sectional view taken along line C-C in Figure 8a,
- Figure 9: an airbag and an arm being connected to the airbag,
- Figure 10: an alternative to what is shown in Figure 9,
- Figure 11: a further embodiment of the invention with a telescopic arm,
- Figure 12: what is shown in Figure 11 when the airbag is fully deployed.

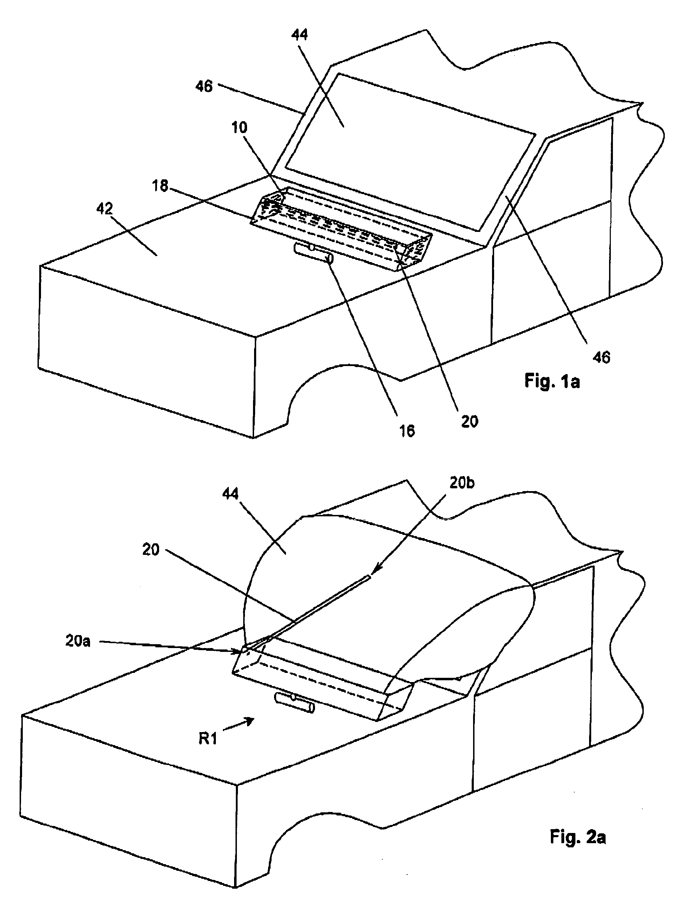

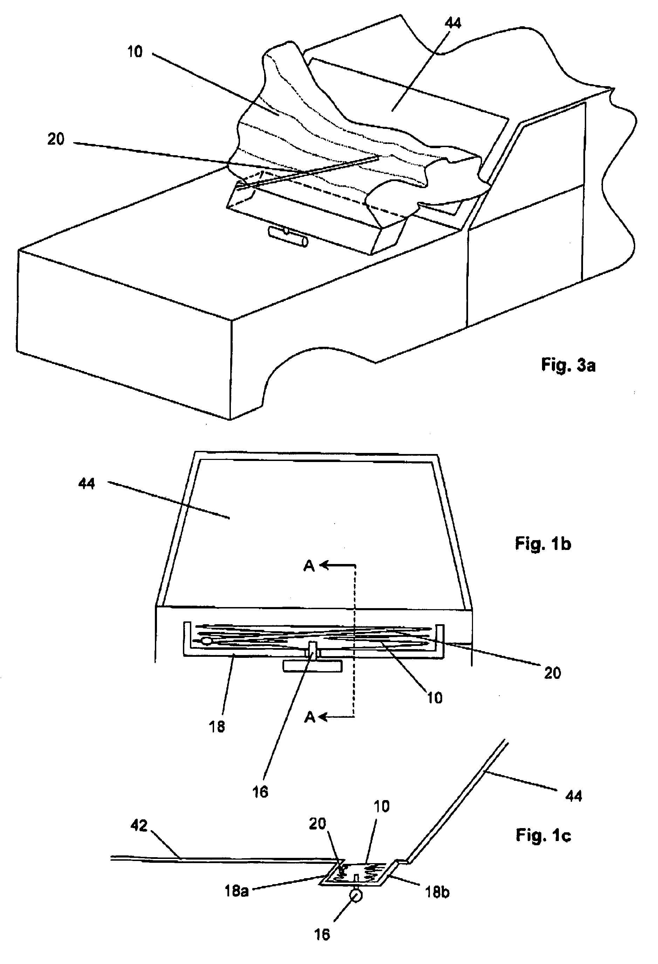

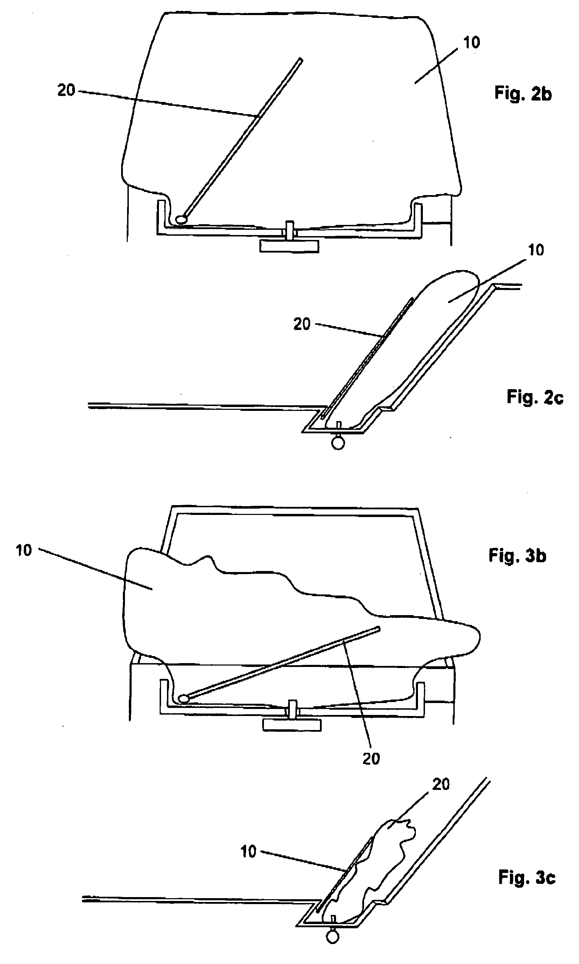

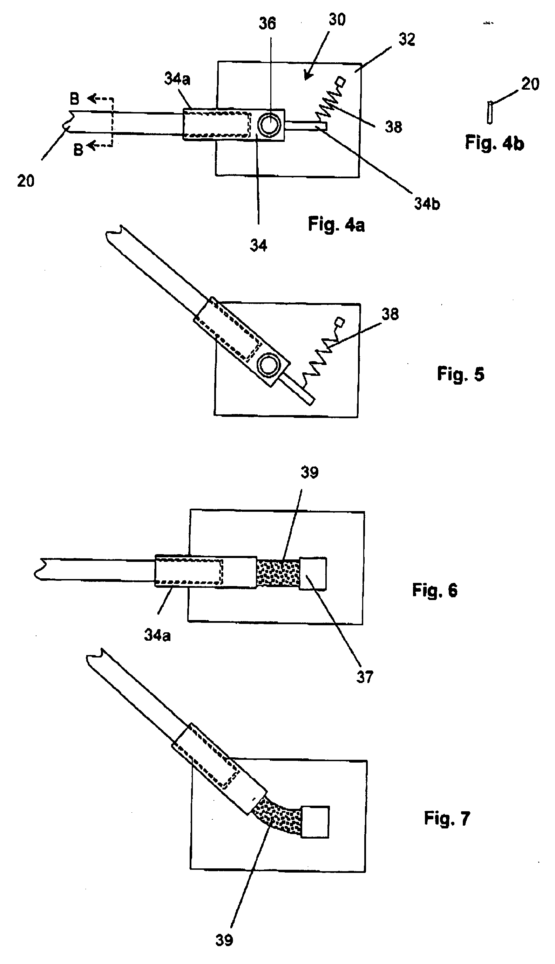

The basic structure of the invention will now be described in view of Figures 1a to 3c. Figures 1a. 1b and 1c show a passenger car with a pedestrian airbag arrangement in its resting state in different views, Figures 2a, 2b and 2c show the vehicle with the airbag of the pedestrian airbag arrangement being in fully deployed state and Figures 3a, 3b and 3c show the airbag of the pedestrian airbag arrangement when it is partially retracted by a retraction means. The Figures 4a, 4b and 5 show the retraction means in greater detail. In the following reference is made to all of these Figures:

The pedestrian airbag arrangement comprises an airbag 10 being located in a housing 18 and being in fluid connection with a gas generator 16 serving as the inflator of the airbag 10. The housing 18 is located under the bonnet or in a gap between the windscreen 44 and the bonnet 42 as is known in the prior art. In the embodiment shown the housing 18 is relatively long extending over a large part of the width of the bonnet 44.

In an initial state the airbag 10 is folded into the housing 18. After the ignition of the gas generator 16, the airbag 10 deploys and covers a part of the windscreen 44 and/or a part of at least one of the A-pillars 46. In the embodiment shown (see especially Figure 2a) the airbag 10 covers the windscreen 44 and both a-pillars 46 more or less completely. After the completely deployed state (Figure 2a, 2b, 2c) has been reached the gas exhausts from the airbag via venting holes (not shown) and is retracted by a retraction means.

This retraction means comprises a mechanically stable elongated member, namely an arm 20 which extends from a first end 20a to a second end 20b. The first end 20a of this arm 20 is connected to a vehicle fixed part, namely the front wall 18a of the housing 18, the second end of the arm 20 is connected to the airbag 10. The connection to the housing is achieved via a mounting part 30 comprising a base plate 32 connected to front wall 18a of the housing and a connection part 34. This connection part 34 comprises a sleeve 34a for receiving the first end 20a of the arm, and a lever 34b extending in opposite direction than the sleeve 34a. The connection part 34 is pivotable connected to the base plate 32 via an axle 36 extending perpendicularly from the base plate 32. Additionally, the lever 34b is connected to the base plate 32 by means of a spring 38. Consequently, the connection part 34 can be pivoted around the axle 36. When the connection part 34 is pivoted out of its resting position which is shown in Figure 4a, the spring 38 is loaded (Figure 5). In the embodiment shown a spiral spring connected to the lever 34b is used, but it needs to be mentioned that of course also other types of springs and connections can be used, especially a constant force spring winding around the axle 36. The mounting plate can be an integral part of the housing.

When the airbag 10 deploys, it lifts the second end 20b of the arm 20 and thus the arm 20 is pivoted around the axle 36 because of the connection described above. So, when the airbag is fully deployed as shown in Figure 2a, the spring 38 is loaded. The loaded spring exerts a force to the arm 20 in a returning direction such that the arm 20 returns to its resting state and thus the arm 20 retracts the airbag from the windscreen 44 as is shown in Figure 3a. So, the airbag 10 is retracted quickly from the windscreen 44 as soon as the pressure inside the airbag drops.

In the embodiment shown, the front wall 18a of the housing 18 has basically the same inclination as the windscreen 44, and so the axle, which defines the pivoting axis, is basically perpendicular to the windscreen. Due to this geometry the arm 20 extends basically parallel to the windscreen 44 in all states of the deployment of the airbag, as can best be seen from Figure 3c. This is of course a big advantage, since it is desired that the airbag 10 also extends basically parallel to the windscreen 44.

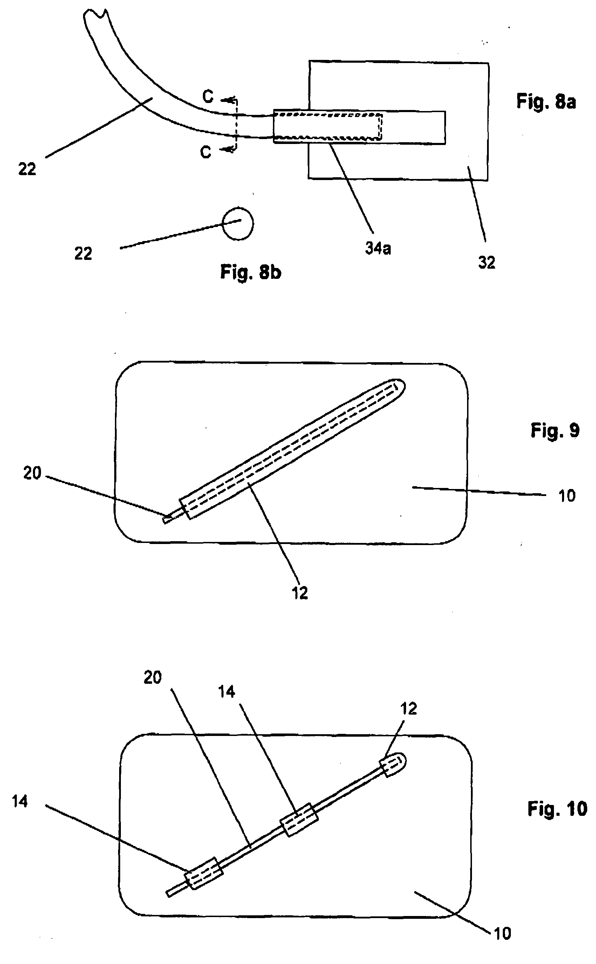

In the embodiment described, the arm 20 has a flat rectangular cross section as is shown in Figure 4b which is a sectional view taken along line B-B in Figure 4a. So, the arm 20 has basically the shape of a ruler. The arm 20 is preferably made of a material which has some elasticity, such that the arm 20 can to some extend bend in a direction perpendicular to the broad side extending parallel to the windscreen. The arm can be made of a suitable plastic material or of a sheet metal. This means, that the arm 20 is basically stiff in a direction parallel to the windscreen 44 and to some extend flexible in a direction perpendicular to the windscreen 44. The rigidity in the direction parallel to the windscreen is important in order to retract the airbag due to the force of the spring 38. The flexibility in a direction perpendicular to the windscreen 44 is especially important if the arm 20 is located on the side of the airbag 10 pointing away from the vehicle, this means on the impact surface for the pedestrian. If this pedestrian hits the airbag, he or she might also hit the arm 20 which then bends so that it does not hurt the pedestrian. Figures 7 and 8 show an alternative embodiment for the mounting part 30. Here, an elastic connector 39 is provided between the sleeve 34a of the connection part 34 and the base plate 32. In the embodiment shown, a block 37 being rigidly connected to the base plate serves for the attachment of the elastic connector to the base plate 32. The connector 39 can be made of a rubber type material or of other plastic materials with elastic properties. When the airbag deploys and the second end of the arm 20 is raised, this elastic connector 39 is deformed against its inner force as shown in Figure 7. This inner force basically acts like the spring 38 of the first embodiment and forces the arm back into its resting position. In this embodiment the arm 20 can also have a flat rectangular cross section.

The Figures 8a and 8b show an embodiment where the arm is not pivoting connected to a vehicle fixed part but is elastic itself. The arm can for example consist of a fibre glass. Figure 8a shows the situation corresponding to Figures 5 and 7. In this case it is preferred to use an elastic arm 22 with a circular cross section (Figure 8b), such that the elastic arm 22a is elastic in all directions perpendicular to its longitudinal extension. Also in this case it is preferred to connect the elastic arm 22 to the vehicle fixed part via a mounting part 30 comprising a sleeve 34a which accommodates the first end 20a of the arm. In this case the mounting part can be rigidly connected to the base plate 32.

As can be seen from Figure 9, the connection between arm 20 and airbag 10 can be achieved via a pocket 12 connected (for example sewn) to one of the outer surfaces of the airbag 10. Alternatively, as shown in Figure 10, a pocket 12 accommodating the second end 20b of the arm 20 and one or more tunnels 14 can be provided on the outer skin of the airbag 10. The pockets/tunnels can be made of the same material as the airbag.

The installation of the airbag is quite easy: After the manufacturing process of the airbag 10 (including attaching of the pocket or the pocket and the tunnels), the arm 20 is inserted into the pocket/into the pocket and tunnels. Then the airbag 10 is folded into its housing 18 and the first end 20a of the arm is inserted into the sleeve 34a. In some cases it might be necessary to secure the first end 20a of the arm 20 in the sleeve 34a, for example by means of the screw extending radially into the sleeve and clamping the arm (not shown).

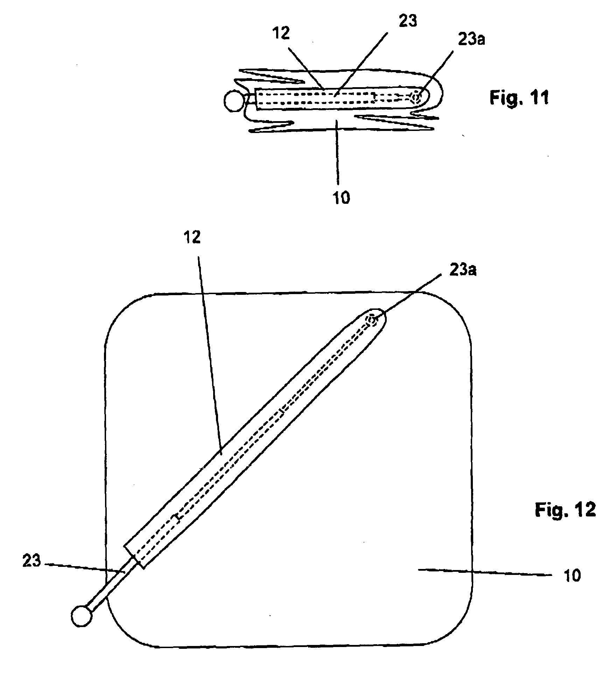

If it is not possible or not desired to use a rather long housing 18, a telescopic arm 23 can be used as is shown in Figure 11. In the resting state the arm is relatively short but when the airbag expands (Figure 12) the airbag pulls the telescopic arm in its elongated state. In this case it is necessary to fix the second end of the arm to the airbag. This can for example be achieved by providing a ring 23a on the second end of the arm and sewing the same to the airbag.

### List of reference numbers

- 10: airbag
- 12: pocket
- 14: tunnel
- 16: gas generator
- 18: housing
- 18a: front wall
- 18b: rear wall
- 20: arm
- 20a: first end
- 20b: second end
- 22: elastic arm
- 23: telescopic arm
- 23a: ring
- 30: mounting part
- 32: base plate
- 34: connection part
- 34a: sleeve
- 34b: lever
- 36: axle
- 38: spring
- 39: connector
- 40: vehicle
- 42: bonnet
- 44: windscreen

## Claims

1. Airbag arrangement for a vehicle,
said airbag arrangement comprising an airbag (10), an inflator being in fluid connection to said airbag (10), and a retraction means for retracting said airbag,
**characterised in that**
the retraction means comprises a mechanically stable elongated member extending from a first end (20a) to a second end (20b) and being connected to a vehicle-fixed part via its first end (20a) and to the airbag (10) via its second end (20b) and/or via a section being located between its first end (20a) and its second end (20b), wherein
the mechanically stable elongated member is elastic in at least one direction perpendicular to its longitudinal direction and/or is pivoting connected to the vehicle-fixed part against the force of an elastic element such that the second end (20b) of the mechanically stable elongated member is displaced by the deploying airbag (10) under elastic deformation of the mechanically stable elongated member and/or the elastic element.

2. Airbag arrangement according to claim 1, **characterised in that** the vehicle-fixed part is an airbag module.

3. Airbag arrangement according to claim 1 or claim 2, **characterised in that** the elongated member is an arm (22) with a circular cross section.

4. Airbag arrangement according to claim 1 or claim 2, **characterised in that** the elongated member is an arm (20) with a flat cross section.

5. Airbag arrangement according to one of the preceding claims, **characterised in that** the airbag is provided with at least one connecting or guiding means, especially with a pocket (12), for the elongated member.

6. Airbag arrangement according to one of the preceding claims, **characterised in that** the elongated means is a telescopic arm (23).

7. Airbag arrangement according to one of the preceding claims, **characterised in that** it is a pedestrian airbag arrangement whose airbag (10) covers at least a part of the windscreen (44) and/or at least a part of at least one A-pillar of the vehicle when in deployed state.

8. Airbag arrangement according to claim 4 and claim 7, **characterised in that** the arm extends basically parallel to the windscreen (44) of the vehicle, such that the arm is bendable in a direction being basically perpendicular to the windscreen (44), and that the arm is connected to the vehicle-fixed part via a hinge axis and that a spring (38) is provided between the arm and the vehicle-fixed part.

9. Method for manufacturing an airbag arrangement according to claim 5 with the following steps:
- inserting a section of the elongated member into the at least one connecting or guiding means,
- folding and/or rolling the airbag (10) into a housing (18) with the elongated member being attached to the airbag (10),
- connecting the first end of the elongated member directly or indirectly with the vehicle-fixed part.

## Patentansprüche

1. Airbaganordnung für ein Fahrzeug,
wobei die Airbaganordnung einen Airbag (10), einen Gasgenerator, der in Fluidverbindung mit dem Airbag (10) steht, und ein Zurückziehmittel zum Zurückziehen des Airbags umfasst,
**dadurch gekennzeichnet, dass**
das Zurückziehmittel ein mechanisch stabiles längliches Element umfasst, das von einem ersten Ende (20a) zu einem zweiten Ende (20b) verläuft und mit einem fahrzeugfesten Teil über sein erstes Ende (20a) und mit dem Airbag (10) über sein zweites Ende (20b) und/oder über einen Abschnitt, der sich zwischen seinem ersten Ende (20a) und seinem zweiten Ende (20b) befindet, verbunden ist, wobei
das mechanisch stabile längliche Element in mindestens einer Richtung senkrecht zu seiner Längsrichtung elastisch ist und/oder drehgelenkig mit dem fahrzeugfesten Teil gegen die Kraft eines elastischen Elements verbunden ist, sodass das zweite Ende (20b) des mechanisch stabilen länglichen Elements durch den sich entfaltenden Airbag (10) unter elastischer Verformung des mechanisch stabilen länglichen Elements und/oder des elastischen Elements ausgelenkt wird.

2. Airbaganordnung nach Anspruch 1, **dadurch gekennzeichnet, dass** es sich bei dem fahrzeugfesten Teil um ein Airbagmodul handelt.

3. Airbaganordnung nach Anspruch 1 oder Anspruch 2, **dadurch gekennzeichnet, dass** es sich bei dem länglichen Element um einen Arm (22) mit einem kreisförmigen Querschnitt handelt.

4. Airbaganordnung nach Anspruch 1 oder Anspruch 2, **dadurch gekennzeichnet, dass** es sich bei dem länglichen Element um einen Arm (20) mit einem flachen Querschnitt handelt.

5. Airbaganordnung nach einem der vorhergehenden Ansprüche, **dadurch gekennzeichnet, dass** der Airbag mit mindestens einem Verbindungs- oder Führungsmittel, insbesondere mit einer Hülle (12), für das längliche Element versehen ist.

6. Airbaganordnung nach einem der vorhergehenden Ansprüche, **dadurch gekennzeichnet, dass** es sich bei dem länglichen Mittel um einen Teleskoparm (23) handelt.

7. Airbaganordnung nach einem der vorhergehenden Ansprüche, **dadurch gekennzeichnet, dass** es sich dabei um eine Fußgängerairbaganordnung handelt, dessen Airbag (10) zumindest einen Teil der Windschutzscheibe (44) und/oder zumindest einen Teil von mindestens einer A-Säule des Fahrzeugs bedeckt, wenn er sich im entfalteten Zustand befindet.

8. Airbaganordnung nach Anspruch 4 und Anspruch 7, **dadurch gekennzeichnet, dass** der Arm grundsätzlich parallel zur Windschutzscheibe (44) des Fahrzeugs verläuft, sodass der Arm in einer Richtung grundsätzlich senkrecht zur Windschutzscheibe (44) biegbar ist, und dass der Arm mit dem fahrzeugfesten Teil über eine Gelenkachse verbunden ist und dass eine Feder (38) zwischen dem Arm und dem fahrzeugfesten Teil angeordnet ist.

9. Verfahren zum Herstellen einer Airbaganordnung nach Anspruch 5 mit den folgenden Schritten:
- Einführen eines Abschnitts des länglichen Elements in das mindestens eine Verbindungs- oder Führungsmittel,
- Legen und/oder Rollen des Airbags (10) in ein Gehäuse (18), wobei das längliche Element an dem Airbag (10) befestigt ist,
- Verbinden des ersten Endes des länglichen Elements direkt oder indirekt mit dem fahrzeugfesten Teil.

## Revendications

1. Agencement d'airbag pour véhicule,
ledit agencement d'airbag comprenant un airbag (10), un gonfleur qui est en liaison fluidique avec ledit airbag (10), et un moyen de rétraction pour rétracter ledit airbag,
**caractérisé en ce que**
le moyen de rétraction comprend un élément allongé mécaniquement stable s'étendant d'une première extrémité (20a) à une seconde extrémité (20b) et qui est relié à une partie solidaire du véhicule par sa première extrémité (20a) et à l'airbag (10) par sa seconde extrémité (20b) et/ou par une portion qui est située entre sa première extrémité (20a) et sa seconde extrémité (20b), dans lequel
l'élément allongé mécaniquement stable est élastique dans au moins une direction perpendiculaire à sa direction longitudinale et/ou est relié de manière pivotante à la partie solidaire du véhicule contre la force d'un élément élastique de sorte que la seconde extrémité (20b) de l'élément allongé mécaniquement stable est déplacée par l'airbag se déployant (10) avec une déformation élastique de l'élément allongé mécaniquement stable et/ou de l'élément élastique.

2. Agencement d'airbag selon la revendication 1, **caractérisé en ce que** la partie solidaire du véhicule est un module d'airbag.

3. Agencement d'airbag selon la revendication 1 ou la revendication 2, **caractérisé en ce que** l'élément allongé est un bras (22) avec une section circulaire.

4. Agencement d'airbag selon la revendication 1 ou la revendication 2, **caractérisé en ce que** l'élément allongé est un bras (20) avec une section plate.

5. Agencement d'airbag selon l'une des revendications précédentes, **caractérisé en ce que** l'airbag est muni d'au moins un moyen de liaison ou de guidage, en particulier avec une poche (12) pour l'élément allongé.

6. Agencement d'airbag selon l'une des revendications précédentes, **caractérisé en ce que** le moyen allongé est un bras télescopique (23).

7. Agencement d'airbag selon l'une des revendications précédentes, **caractérisé en ce qu'**il s'agit d'un agencement d'airbag pour piéton dont l'airbag (10) recouvre au moins une partie du pare-brise (44) et/ou au moins une partie d'au moins un montant A du véhicule quand il est dans l'état déployé.

8. Agencement d'airbag selon la revendication 4 et la revendication 7, **caractérisé en ce que** le bras s'étend principalement parallèlement au pare-brise (44) du véhicule, de sorte que le bras peut être courbé dans une direction qui est principalement perpendiculaire au pare-brise (44), et **en ce que** le bras est relié à la partie solidaire du véhicule par un axe d'articulation et **en ce qu'**un ressort (38) est disposé entre le bras et la partie solidaire du véhicule.

9. Procédé de fabrication d'un agencement d'airbag selon la revendication 5, comprenant les étapes suivantes :
- insérer une portion de l'élément allongé dans l'au moins un moyen de liaison ou de guidage,
- plier et/ou enrouler l'airbag (10) dans un boîtier (18) avec l'élément allongé attaché à l'airbag (10),
- relier la première extrémité de l'élément allongé directement ou indirectement à la partie solidaire du véhicule.
